# EUROPEAN PATENT APPLICATION

(11) **EP 2 755 126 A2**
(43) Date of publication of application: **16.07.2014**
(21) Application number: 14150836.6
(22) Date of filing: 10.01.2014
(51) Int. Cl.: G06F 3/0488, G06F 3/0485

(54) **Method and device for displaying scrolling information in electronic device**

(30) Priority: 11.01.2013 KR 20130003402
(71) Applicant: Samsung Electronics Co., Ltd, Gyeonggi-do 443-742 (KR)
(72) Inventor: Jin, Jeong-Gyu, Gyeonggi-do (KR)
(74) Representative: Nederlandsch Octrooibureau

(57) **Abstract**

A method of displaying scrolling information in an electronic device is provided. The method includes displaying content, when a size of the content is greater than a screen size, displaying a scroll bar in a specific area of a screen, detecting a gesture that adjusts a size of the scroll bar, and when the gesture is detected, scrolling the content in a direction corresponding to a direction of the gesture and in correspondence to a size of the adjusted scroll bar.

## Description

### TECHNICAL FIELD

The present disclosure relates to an electronic device.

### BACKGROUND

Currently, as a portable terminal provides various functions for a user's convenience the amount of information to be displayed on a screen of the portable terminal gradually increases. However, due to the small screen size of the portable terminal, the amount of information available for display on one screen is limited. Accordingly, in order to view other information not displayed on a screen, users input move keys several times or uses a method of moving data displayed on a screen through scrolling (hereinafter referred to be as a scrolling operation). The scrolling operation means moving data displayed on a screen up and down or left and right to display data not currently displayed on the screen to be displayed. For example, by an operation of scrolling upward, the entire content of a screen moves upward and data positioned at the upper portion moves off the screen and becomes un-viewable and new data appear at the bottom portion of the screen. Such a scrolling method allows a user to estimate an entire data amount and to realize an approximate position on the order in which current data among the entirety of the data is aligned.

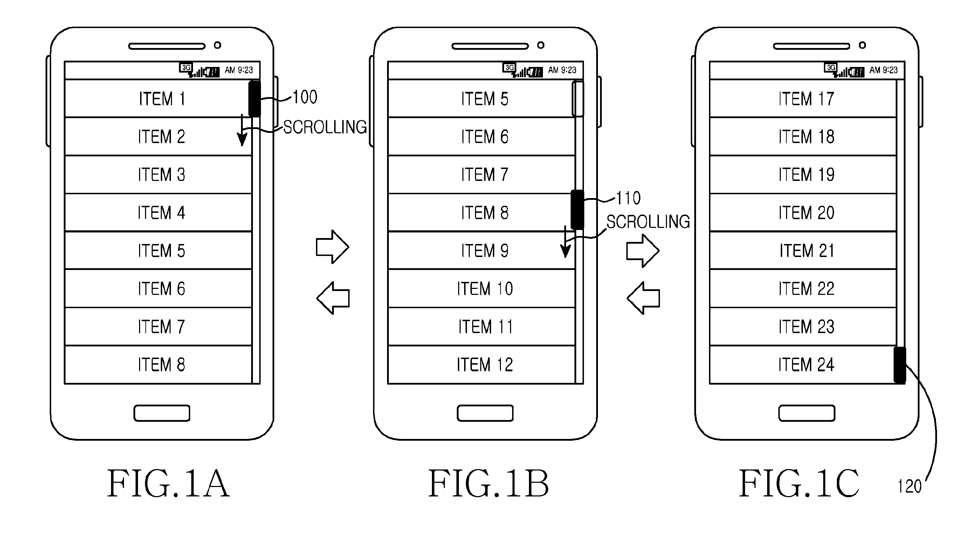

FIGS. 1A, 1B, and 1C illustrate a screen according to a scrolling operation through a technique according to the related art.

Referring to FIG. 1A, as an initial webpage screen or an initial screen after opening documents, when the size of a webpage or document to be displayed is greater than a screen size, a scroll bar 100 is displayed on a specific area of a screen. Preferably, the position of the initial scroll bar 100 is positioned at the upper right corner and the size of the scroll bar 100 is inversely proportional to the size of the webpage or document. For example, when the size of a webpage or document is small, the size of the scroll bar 100 is large and when the size of a webpage or document is large, the size of the scroll bar 100 is small. According to the size of an initial scroll bar, a user may expect an approximate size of a webpage or document. That is, this means that when the size of the initial scroll bar 100 is large, the content of a webpage or document to scroll is small, and when the size of the initial scroll bar 100 is small, the content of a webpage or document to scroll is large.

Referring to FIG. 1B, when the scroll bar 100 scrolls down about 30% from FIG. 1A, data positioned at the upper part of the screen moves upward and disappears, and data at the bottom part of the screen moves upward. At this point, the position 110 of the scroll bar 100 is positioned at an about 30% area of an area (hereinafter referred to as a scroll area) where the scroll bar 100 moves.

Referring to FIG. 1C, when the scroll bar 100 scrolls down about 70% from FIG. 1B, data positioned at the upper part of the screen moves upward and disappears, and data at the bottom part of the screen moves upward. At this point, the position of the scroll bar 100 is positioned at the bottom 120 of the scroll area.

On the contrary, when the scroll bar 100 scrolls from the bottom shown in FIG. 1C toward the top shown in FIG. 1B, data positioned at the bottom part moves down and disappears, and data at the top part moves toward the bottom part.

As mentioned above, when a webpage or document is displayed on a screen, conventionally, if the size of a webpage or document is greater than a screen size, a scroll bar is displayed and by using this, the webpage or document is scrolled up and down or left and right or the scroll bar is dragged by clicking the scroll bar or a webpage or document content is displayed by clicking a specific area.

However, if the size of an initial scroll bar is small due to a lot of content to be displayed on a screen, by referring to the position of a small scroll bar in a scroll area, it is determined which part in an entire content corresponds to a content to be displayed on a current screen.

That is, according to a conventional way, it is roughly determined which part in an entire content corresponds to a content to be displayed on a current screen by referring to the position of a scroll bar in a scroll area. That is, information for accurate determination is not provided.

Accordingly, during a scroll operation in an electronic device, a method and device for providing information for determining which part in an entire content corresponds to a content to be displayed on a current screen are required.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and device for displaying scrolling information in an electronic device.

Another aspect of the present disclosure is to provide a method and device for providing information for determining which part in an entire content corresponds to a content to be displayed on a current screen during a scroll operation in an electronic device.

In accordance with an aspect of the present disclosure, a method of displaying scrolling information in an electronic device is provided. The method includes displaying content, when a size of the content is greater than a screen size, displaying a scroll bar in a specific area of a screen, detecting a gesture that adjusts a size of the scroll bar, and when the gesture is detected, scrolling the content in a direction corresponding to a direction of the gesture and in correspondence to a size of the adjusted scroll bar.

In accordance with another aspect of the present disclosure, a method of displaying scrolling information in an electronic device is provided. The method includes displaying content, when a size of the content is greater than a screen size, displaying a scroll bar in a specific area of a screen, detecting a gesture for adjusting a size of the scroll bar, when the gesture is detected, scrolling the content in a direction corresponding to a direction of the gesture and in correspondence to a size of the adjusted scroll bar, and displaying a position of the scrolled content as a percentage.

In accordance with another aspect of the present disclosure, an electronic device is provided. The electronic device includes at least one processor, a memory, and at least one program stored in the memory and configured to execute on the at least one processor, wherein the program, when executed on the at least one processor, displays content, displays a scroll bar in a specific area of a screen when a size of the content is greater than a screen size, detects a gesture for adjusting a size of the scroll bar, and scrolls the content in a direction corresponding to a direction of the gesture and in correspondence to a size of the adjusted scroll bar when the gesture is detected.

In accordance with another aspect of the present disclosure, an electronic device is provided. The electronic device includes at least one processor, a memory, and at least one program stored in the memory and configured to be executed on the at least one processor, wherein the program, when executed on the at least one processor, displays content, displays a scroll bar in a specific area of a screen when a size of the content is greater than a screen size, detects a gesture for adjusting a size of the scroll bar, and scrolls the content in a direction corresponding to a direction of the gesture and in correspondence to a size of the adjusted scroll bar when the gesture is detected.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features and advantages of certain embodiments of the present disclosure will be more apparent from the following description taken in conjunction with the accompanying drawings, in which:
FIGS. 1A, 1B, and 1C illustrate a screen according to a scrolling operation of a technique according to the related art;
FIGS. 2A, 2B, and 3C illustrate a screen following a scrolling operation according to a first embodiment of the present disclosure;
FIGS. 3A, 3B, and 3C illustrate a screen following a scrolling operation according to a second embodiment of the present disclosure;
FIGS. 4A, 4B, and 4C illustrate a screen following a scrolling operation according to a third embodiment of the present disclosure;
FIG. 5 is a flowchart illustrating a scrolling information display of an electronic device according to a first embodiment of the present disclosure;
FIG. 6 is a flowchart illustrating a scrolling information display of an electronic device according to a second embodiment of the present disclosure; and
FIG. 7 is a view illustrating a configuration of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure relates to a method and device for displaying scrolling information in an electronic device.

Hereinafter, a method and device for providing information for determining which part in an entire content corresponds to a content to be displayed on a current screen during a scroll operation in an electronic device will be described.

Hereinafter, the term "touch" means a state that a user's finger or stylus pen is in contact on a touch screen. The term "touch release" means that a finger or stylus pen contact on a touch screen is released. The term "drag" may mean an operation that a touch point moves while maintaining a touch on the touch screen. The term "drag release" means that a finger or stylus pen contact on a touch screen is released after a user drags.

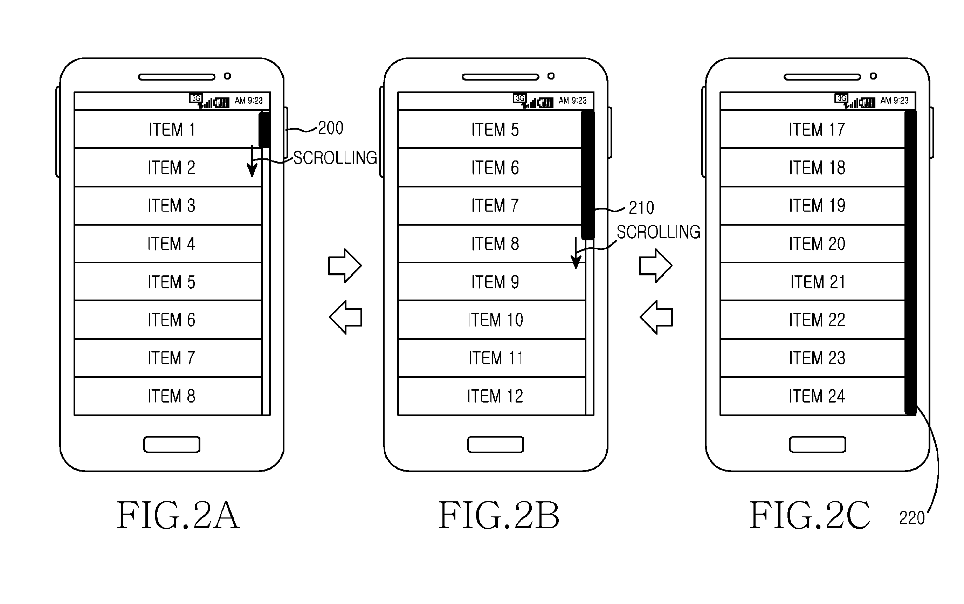

FIGS. 2A, 2B, and 2C illustrate a screen following a scrolling operation according to a first embodiment of the present disclosure.

Referring to FIG. 2A, as an initial webpage screen or an initial screen after opening documents, when the size of a webpage to be displayed or the size of document is greater than a screen size, a scroll bar 200 is displayed on a specific area of a screen. Preferably, the position of the initial scroll bar 200 is positioned at the upper right corner of a screen and the length of the scroll bar 200 is inversely proportional to the length of a webpage or document. For example, when the length of a webpage or document is short, the size of the scroll bar 200 is long and when the size of a webpage or document is long, the size of the scroll bar 200 is short. According to the length of an initial scroll bar, a user may expect an approximate length of a webpage or document. That is, this means that when the length of the initial scroll bar 200 is long, the content of a webpage or document to scroll is small, and when the size of the initial scroll bar 200 is short, the content of a webpage or document to scroll is large.

According to various embodiments, when a user gesture is inputted (for example, a touch input), the scroll bar 200 may be shown, or when a touch is released, the scroll bar 200 may disappear.

Referring to FIG. 2B, when the scroll bar 200 scrolls up about 50% from FIG. 2A, data positioned at the upper part of the screen moves upward and disappears, and data at the bottom part of the screen moves upward. At this point, the scroll bar 200 does not move and the length of the scroll bar 200 becomes longer according to a drag distance or movement distance as shown in 210. The increased length of the scroll bar 200 indicates which part in an entire content corresponds to a content displayed on a current screen.

Referring to FIG. 2C, when the scroll bar 200 scrolls down about 50% from FIG. 2B (that is, when the scroll bar 200 moves to the bottom), data positioned at the upper part of the screen moves upward and disappears, and data at the bottom part of the screen moves upward. At this point, the length of the scroll bar 200 is identical to the length of a scroll area as shown in 220, and indicates the last part in an entire content of a webpage or document. Also, the length of the scroll bar 200 does not become longer any more.

On the contrary, when the scroll bar 200 scrolls from the bottom shown in FIG. 2C toward the bottom shown in FIG. 2B, data positioned at the bottom part moves down and disappears, and data at the top part of the screen moves toward the bottom part. At this point, the length of the scroll bar 200 becomes shorter according to a drag distance or movement distance as shown in 210. Here, the length of the scroll bar 200 indicates which part in an entire content corresponds to a content displayed on a current screen.

As mentioned above, by adjusting the length of a scroll bar according to a drag distance or movement distance of document, a user may determine which part in an entire content corresponds to a content displayed on a current screen by referencing the length of the scroll bar.

According to another implementation, in addition to FIGS. 2A to 2C, which position in an entire content corresponds to a content displayed on a current screen may be expressed as a percentage.

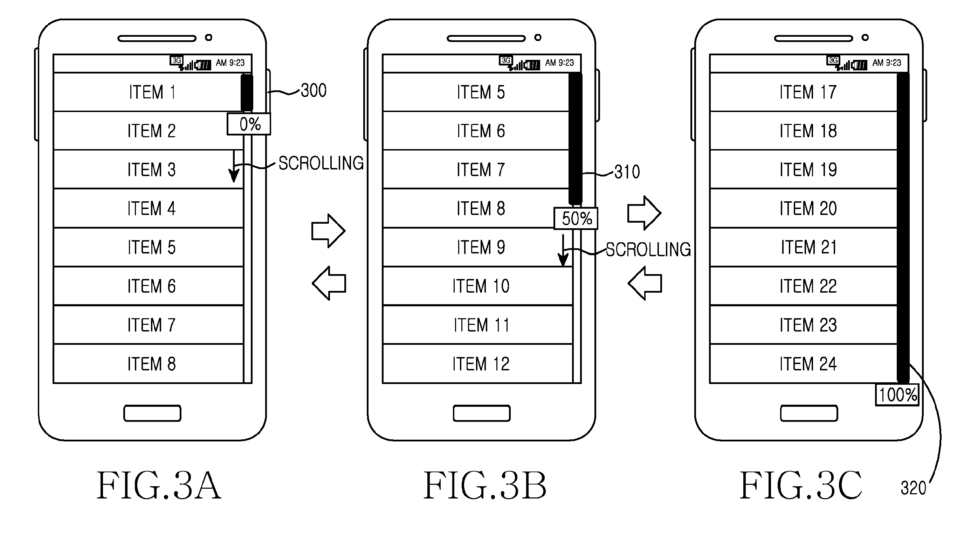

FIGS. 3A to 3C illustrate a screen following a scrolling operation according to a second embodiment of the present disclosure.

In addition to FIG. 2A, as shown in FIG. 3A, which position in an entire content corresponds to a content displayed on a current screen may be expressed as a percentage (i.e., 0%). Preferably, percentage information may be disposed right below a scroll bar 300.

A user may recognize that a content displayed on a current screen is the first part of an entire content by referring to the displayed percentage (i.e., 0%).

In addition to FIG. 2B, as shown in FIG. 3B, which position in an entire content corresponds to a content displayed on a current screen may be expressed as a percentage (i.e., 50%). Preferably, percentage information may be disposed right below the scroll bar as shown in a bar 310.

A user may recognize that a content displayed on a current screen is the middle part of an entire content by referring to the displayed percentage (i.e., 50%).

In addition to FIG. 2C, as shown in FIG. 3C, which position in an entire content corresponds to a content displayed on a current screen may be expressed as a percentage (i.e., 100%) as shown in a bar320. Preferably, percentage information may be disposed right below the scroll bar.

A user may recognize that a content displayed on a current screen is the last part of an entire content by referring to the displayed percentage (i.e., 100%).

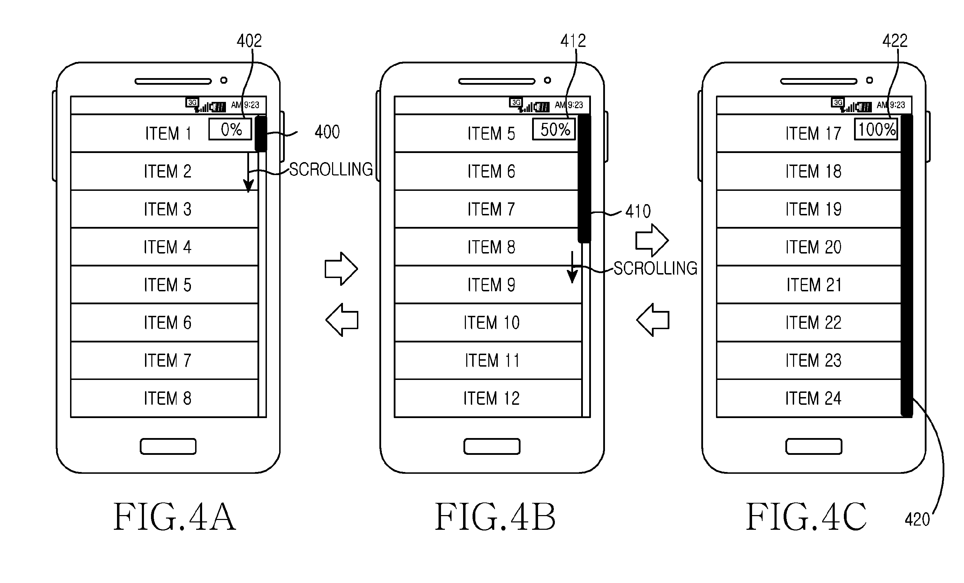

As shown in FIGS. 3A to 3C, the percentage information may be disposed right below the scroll bar but the present disclosure is not limited thereto. For example, the percentage information may be disposed another part of the screen. For example, as shown in FIGS. 4A to 4C, percentage information may be disposed to the left of the top of the scroll bar.

FIGS. 4A to 4C illustrate a view when percentage information in addition to the length adjustment of a scroll bar is disposed at the upper right corner according to an embodiment of the present disclosure.

In addition to FIG. 2A, as shown in FIG. 4A, which position in an entire content corresponds to a content displayed on a current screen may be expressed as a percentage (i.e., 0%) 402. Preferably, percentage information may be disposed to the left of the top of the scroll bar 400.

A user may recognize that a content displayed on a current screen is the first part of an entire content by referring to the displayed percentage (i.e., 0%) 402.

In addition to FIG. 2B, as shown in FIG. 4B, which position in an entire content corresponds to a content displayed on a current screen may be expressed as a percentage (i.e., 50%) 412. Preferably, percentage information may be disposed to the left of the top of the scroll bar as shown in 410.

A user may recognize that a content displayed on a current screen is the middle part of an entire content by referring to the displayed percentage (i.e., 50%) 412.

In addition to FIG. 2C, as shown in FIG. 4C, which position in an entire content corresponds to a content displayed on a current screen may be expressed as a percentage (i.e., 100%) 422 as shown in 420. Preferably, percentage information may be disposed to the left of the top of the scroll bar.

A user may recognize that a content displayed on a current screen is the last part of an entire content by referring to the displayed percentage (i.e., 100%) 422.

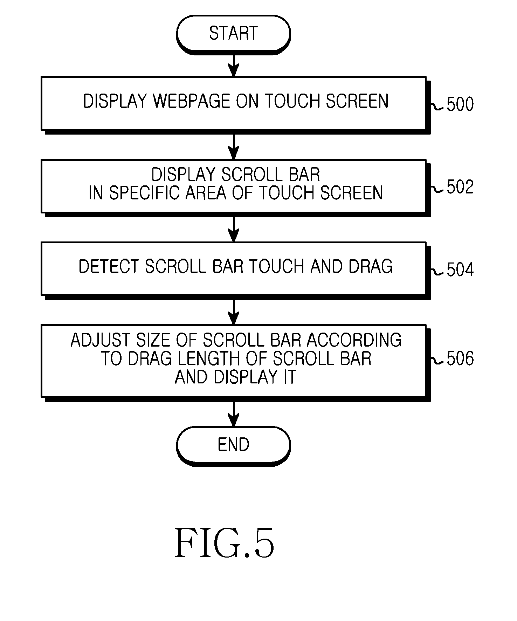

FIG. 5 is a flowchart illustrating a scrolling information display of an electronic device according to a first embodiment of the present disclosure.

Referring to FIG. 5, the electronic device displays a corresponding webpage on a touch screen by using a web browser in operation 500.

Then, the electronic device displays a scroll bar in a specific area when a content of a webpage (or document) is greater than a screen size in operation 502. At this point, preferably, an initial scroll bar is disposed at the upper right corner to indicate that the content of the webpage (or document) is the first part. Additionally, the length of the initial scroll bar is inversely proportional to the size of the webpage or document.

Then, the electronic device detects a user's touch and drag in order for the movement of the webpage (or document) in operation 504. For example, in order to display content at the bottom part of the webpage or document, a drag direction heads upward, and in order to display the content at the upper part of the webpage or document, a drag direction heads downward. Here, the movement of the document is performed when a user touches part of the displayed content and drags it toward a corresponding direction.

According to another implementation, the electronic device detects a user's scroll bar touch or drag and, according to a detection result, moves the content of a webpage or document. For example, in order to display content at the bottom part of the webpage or document, the scroll bar moves in a downward direction in a scroll area and in order to display the content at the upper part of the webpage or document, the scroll bar moves in an upward direction in a scroll area.

Then, the electronic device adjusts the length of the scroll bar according to the drag length of the document and displays the document in operation 506. For example, if the scroll bar is dragged in an upward direction, the length of the scroll bar becomes longer and is proportional to the position indicating which part in an entire content corresponds to a screen content displayed currently. Substantially, during a scrolling operation, the scroll bar does not move and its length is adjusted.

Then, the procedure of the present disclosure is terminated.

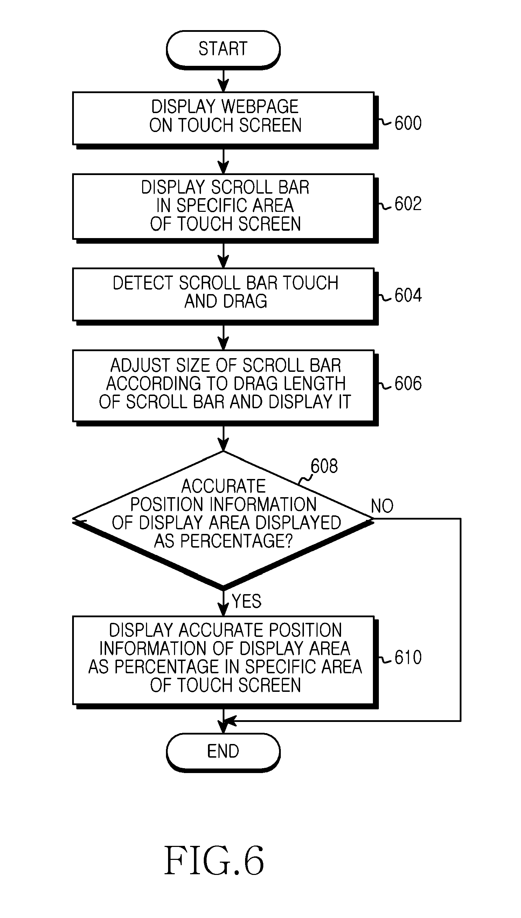

FIG. 6 is a flowchart illustrating a scrolling information display of an electronic device according to a second embodiment of the present disclosure.

Referring to FIG. 6, the electronic device displays a corresponding webpage on a touch screen by using a web browser (or a document viewer) in operation 600.

Then, the electronic device displays a scroll bar in a first area of a screen when a content of a webpage (or document) is greater than a screen size in operation 602. At this point, preferably, an initial scroll bar is disposed at the upper right corner to indicate that the content of the webpage (or document) is the first part. Additionally, the length of the initial scroll bar is inversely proportional to the length of the webpage or document. The length of the initial bar is displayed exactly inversely proportional to the total length of the document.

Then, the electronic device detects a user's touch and drag in order for the movement of the webpage (or document) in operation 604. For example, in order to display content at the bottom part of the webpage or document, a drag input heads upward and in order to display a content at the upper part of the webpage or document, a drag input heads downward. Here, the movement of the document is performed when a user touches part of a displayed content and drags it toward a corresponding direction.

Then, the electronic device adjusts the length of the scroll bar according to the drag length of the document and displays the document in operation 606. For example, if the document is dragged in a downward direction, the length of the scroll bar becomes shorter and is proportional to the position indicating which part in an entire content corresponds to a screen content displayed currently. Substantially, during a scrolling operation, the scroll bar does not move and its length is adjusted.

Then, the electronic device determines whether to display percentage information indicating which part in an entire content corresponds to a content displayed on a current screen in operation 608 and when percentage information display is activated ('YES'), in operation 608, the electronic device proceeds to operation 610 and displays on a second area of the screen the percentage information indicating which part in the entire content corresponds to the content displayed on the current screen. Otherwise, when percentage information display is not activated ('NO'), in operation 608, the procedure is terminated.

After displaying on a second area of the screen of the percentage information indicating which part in the entire content corresponds to the content displayed on the current screen in operation 610, the procedure of the present disclosure is terminated.

Although various embodiments of the present disclosure are described using a document or webpage, the present disclosure is not limited thereto and is applicable to various contents. For example, the present disclosure is applicable during video playback.

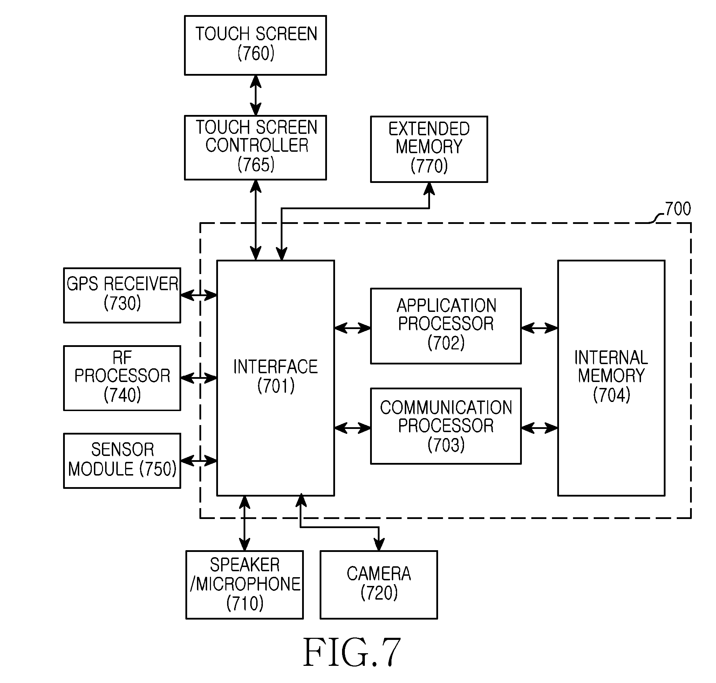

FIG. 7 is a view illustrating a configuration of an electronic device according to an embodiment of the present disclosure.

The electronic device may be a portable electronic device, and also may be a device such as a portable terminal, a mobile terminal, a mobile pad, a media player, a tablet computer, a handheld computer, or a Personal Digital Assistant (PDA). Additionally, the electronic device may be an arbitrary portable electronic device combining at least two functions among such devices.

Referring to FIG. 7, the electronic device is configured including a controller 700, a speaker/microphone 710, a camera 720, a GPS receiver 730, an RF processor 740, a sensor module 750, a touch screen 760, a touch screen controller 765, and an extended memory 770.

The controller 700 includes an interface 701, one or more processors, such as application processor 702 and communication processor 703, and an internal memory 704. If necessary, the entire processor module 700 may be referred to as a processor. The interface 701, the application processor 702, the communication processor 703, and the internal memory 704 may be separate components or may be integrated into one circuit.

The application processor 702 performs various functions for the electronic device by executing various software programs and the communication processor 703 performs processing and control operations for voice communication and data communication. Additionally, in addition to such a typical function, the processors, such as application processor 702 and communication processor 703 may execute a specific software module stored in the extended memory 770 or the internal memory 704 so as to perform specific various functions corresponding to the specific software module. That is, the processors, such as application processor 702 and communication processor 703 perform a method for displaying scrolling information in linkage with software modules stored in the extended memory 770 or the internal memory 704.

For example, the application processor 702 displays a corresponding webpage (or document) on a touch screen by using a web browser (or a document viewer) and when the content of the webpage (or document) is greater than the screen size, displays the scroll bar in a first area of a screen. At this point, preferably, an initial scroll bar is disposed at the upper right corner to indicate that the content of the webpage (or document) is the first part. Additionally, the length of the initial scroll bar is inversely proportional to the length of the total webpage or document.

Additionally, the application processor 702 detects a user's touch and drag input for the movement of the webpage (or document) and adjusts the length of the scroll bar according to a drag length to display the webpage (or document). For example, in order to display content at the bottom part of the webpage or document, a drag direction heads upward, and in order to display content at the upper part of the webpage or document, a drag direction heads downward. Here, the movement of the document is performed when a user touches part of a webpage or document content and drags it toward a corresponding direction. For example, if the document is dragged in an upward direction, the length of the scroll bar becomes longer and is proportional to the position indicating which part in an entire content corresponds to a screen content displayed currently. Substantially, during a scrolling operation, the scroll bar does not move and its length is adjusted.

Furthermore, the application processor 702 determines whether to display percentage information indicating which part in an entire content corresponds to a content displayed on a current screen in operation 702 and when a percentage information display is activated, the application processor 702 displays on a second area of the screen the percentage information indicating which part in the entire content corresponds to the content displayed on the current screen.

Additionally, the shape of a scroll bar may be a typical bar shape but may be expressed in a continuous bar shape of a predetermined length having the same property or in a continuous bar shape of a predetermined length having a different property such as color.

The display of a scroll bar may be controlled not to be displayed on a screen when an input received from a user is terminated or a predetermined time elapses after the input.

Moreover, another processor (not shown), as at least one data processor, may include an image processor or codec. The data processor, the image processor, and the codec may be configured separately. Moreover, the data processor, the image processor, and the codec may be configured with several processors performing different functions. The interface 701 is connected to the touch screen controller 765 and the extended memory 770 of the electronic device.

The sensor module 750 may be coupled to the interface 701 to allow various functions. For example, a motion sensor and an optical sensor are coupled to the interface 701 so that it is possible to detect a motion of each electronic device and light from the outside. Besides that, other sensors such as a positioning system, a temperature sensor, or a bio sensor may be connected to the interface 750 to perform related functions.

The camera 720 may perform a camera function such as picture and video clip recording in combination with the sensor module 750 through the interface 701.

The RF processor 740 performs a communication function. For example, under a control of the communication processor 703, an RF signal is converted into a baseband signal and then provided to the communication processor 703 or a baseband signal from the communication processor 703 is converted into an RF signal and then transmitted. Here, the communication processor 703 processes a baseband signal through various communication methods. For example, the communication methods may include a Global System for Mobile Communication (GSM) method, an Enhanced Data GSM Environment (EDGE) communication method, a Code Division Multiple Access (CDMA) communication method, a W-Code Division Multiple Access (W-CDMA) communication network, a Long Term Evolution (LTE) communication network, an Orthogonal Frequency Division Multiple Access (OFDMA) communication method, a Wireless Fidelity (Wi-Fi) communication method, a WiMax communication method, and/or a Bluetooth communication method but the present disclosure is not limited thereto.

The speaker/microphone 710 may be responsible for an input and output of audio stream such as voice recognition, voice copy, digital recording, and phone functions. That is, the speaker/microphone 710 converts a voice signal into an electrical signal or convert an electrical signal into a voice signal. Although not shown in the drawings, an attachable and detachable ear phone, head phone, or head set may be connected to an electronic device through an external port.

The touch screen controller 765 may be coupled to the touch screen 760. The touch screen 760 and the touch screen controller 765 are not limited to the above, and may detect a contact, movement, or stop through an arbitrary multi touch detection technology including other proximity sensor arrangements or other components in addition to capacitive, resistive, infrared and surface acoustic wave technologies for determining at least one contact point on the gesture screen 760.

The touch screen 760 provides an input/output interface between the electronic device and a user. That is, the touch screen 760 delivers a user's touch input to the electronic device. Additionally, the touch screen 760 is a medium displaying an output from the electronic device to a user. That is, the touch screen 760 displays a visual output to a user. Such a visual output includes text, graphic, video, and combinations thereof.

The touch screen 760 may include various displays. For example, the touch screen 980 is not limited to the above, and may include liquid crystal display (LCD), Light Emitting Diode (LED), light emitting polymer display (LPD), Organic Light Emitting Diode (OLED), Active Matrix Organic Light Emitting Diode (AMOLED) or Flexible LED (FLED).

The GPS receiver 730 converts signals from satellites into information, for example, position, speed, and time. For example, the distance between a satellite and a GPS receiver may be calculated by multiplying the speed of light and a signal arrival time and the position of an electronic device is measured by obtaining the accurate positions and distances of three satellites through the well-known principle of triangulation.

The extended memory 770 or the internal memory 704 may include at least one magnetic disk storage device, at least one high-speed random access memory and/or nonvolatile memory, and at least one optical storage device and/or flash memory (e.g., NAND and NOR).

The extended memory 770 or the internal memory 704 stores software. The software component includes an operating system software module, a communication software module, a graphic software module, a user interface software module, an MPEG module, a camera software module, and at least one application software module. Additionally, modules, i.e., software components, may be expressed in a set of instructions and thus, may be referred to as an instruction set. The modules may be expressed in programs.

The operating system software may include various software components controlling general system operations. The control of such general system operations means memory management and control, storage hardware (device) control and management, and power control and management, for example. Such operating system software performs a function allowing smooth communication between various hardware (e.g., devices) and various software components (e.g., modules).

The communication software module may allow communication with other electronic devices such as computers, servers, and/or portable terminals through the RF processor 740. Also, the communication software module is configured with a protocol structure corresponding to a corresponding communication method.

The graphic software module provides graphics on the touch screen 760 and includes various software components for display. The term "graphics" may include text, webpage, icon, digital image, video, and animation.

The user interface software module includes various software components relating to a user interface. The user interface software module includes contents on how a state of a user interface is changed or under what condition a state of a user interface is changed.

The camera software module includes a camera related software component for performing camera related processes and functions. The application module may include a browser including a rendering engine, email, instant message, word processing, keyboard emulation, an address book, a touch list, a widget, Digital Right Management (DRM), voice recognition, voice copy, a position determining function, and location based service. The memories 770 and 704 may include additional modules (or instructions) in addition to the above-mentioned modules. Of, if necessary, some modules (or instructions) may not be used.

In relation to the present disclosure, an application module includes instructions (referring to FIGS. 5 and 6) for displaying scrolling information.

For example, the application module displays a corresponding webpage or document on a touch screen by using a web browser or a document viewer and, when the content of the webpage (or document) is greater than the screen size, displays the scroll bar in a first area of a screen. At this point, preferably, an initial scroll bar is disposed at the upper right corner to indicate that the content of the webpage (or document) is the first part. Additionally, the length of the initial scroll bar is inversely proportional to the length of the entire webpage or document.

Additionally, the application module detects a user's touch and drag input for the movement of the webpage (or document) and adjusts the length of the scroll bar according to a drag length to display the webpage (or document). For example, in order to display content at the bottom part of the webpage or document, a drag direction heads upward, and in order to display content at the upper part of the webpage or document, a drag direction heads downward. Here, the movement of the document is performed when a user touches part of a webpage or document content and drags it toward a corresponding direction. Moreover, if the document is dragged in a downward direction, the length of the scroll bar becomes shorter and is proportional to the position indicating which part in an entire content corresponds to a screen content displayed currently. Substantially, during a scrolling operation, the scroll bar does not move and its length is adjusted.

Furthermore, the application module determines whether to display percentage information indicating which part in an entire content corresponds to a content displayed on a current screen in operation 702 and when percentage information display is activated, the application processor 702 displays on a second area of the screen the percentage information indicating which part in the entire content corresponds to the content displayed on the current screen.

Methods according to various embodiments listed in claims and/or specification of the present disclosure may be implemented in hardware, software, or a combination thereof.

If the methods are implemented using software, a computer readable recording medium storing at least one program (i.e., a software module) may be provided. At least one program stored in a computer readable recording medium is configured for execution by at least one processor in an electronic device. At least one program includes instructions for executing, by an electronic device, the methods according to the various embodiments listed in claims and/or specification of the present disclosure.

Such program (for example, software modules and software) may be stored in random access memory, non-volatile memory including flash memory, Read Only Memory (ROM), Electrically Erasable Programmable Read Only Memory (EEPROM), a magnetic disc storage device, Compact Disc-ROM (CD-ROM), Digital Versatile Discs (DVDs), or another form of an optical storage device, or a magnetic cassette. Or such program may be stored in a memory configured with a combination of some or all of the above. Additionally, each configuration memory may be included in plurality.

Additionally, such program may be stored in an attachable storage device accessing an electronic device through a communication network such as Intranet, Local Area Network (LAN), Wide LAN (WLAN), or Storage Area Network (SAN) or a communication network configured with a combination thereof. Such a storage device may access an electronic device through an external port.

Additionally, an additional storage device on a communication network may access a portable electronic device.

As mentioned above, during a scrolling operation, by providing information for determining which part in an entire content corresponds to a content displayed on a current screen, a user may accurately determine which part in the entire content corresponds to the content displayed on the current screen.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying scrolling information in an electronic device, the method comprising:
displaying content;
when a size of the content is greater than a screen size, displaying a scroll bar in a specific area of a screen;
detecting a gesture that adjusts a size of the scroll bar; and
when the gesture is detected, scrolling the content in a direction corresponding to a direction of the gesture and in correspondence to a size of the adjusted scroll bar.

2. The method of claim 1, wherein the scrolling of the content in the direction corresponding to the direction of the gesture comprises:
as the size of the scroll bar is increased, scrolling to a position adjacent to an end part of the content; and
as the size of the scroll bar is reduced, scrolling to a position adjacent to a first part of the content.

3. The method of claim 1, further comprising:
calculating a position of the scrolled content as a percentage; and
displaying the percentage in an area adjacent to the scroll bar.

4. The method of claim 1, wherein the scrolling comprises one of vertical scrolling and horizontal scrolling.

5. The method of claim 1, wherein the scroll bar is displayed in a specific area of the screen when a touch is inputted and disappears when the touch is released.

6. The method of claim 1, wherein the size of the scroll bar is adjusted in proportional to a drag distance or a movement distance.

7. The method of claim 1, wherein a size of an initial scroll bar is determined based on the size of the content.

8. A method of displaying scrolling information in an electronic device, the method comprising:
displaying content;
when a size of the content is greater than a screen size, displaying a scroll bar in a specific area of a screen;
detecting a gesture for adjusting a size of the scroll bar;
when the gesture is detected, scrolling the content in a direction corresponding to a direction of the gesture and in correspondence to a size of the adjusted scroll bar; and
displaying a position of the scrolled content as a percentage.

9. The method of claim 8, wherein the scrolling of the content in the direction corresponding to the direction of the gesture comprises:
as the size of the scroll bar is increased, scrolling to a position adjacent to an end part of the content; and
as the size of the scroll bar is reduced, scrolling to a position adjacent to a first part of the content.

10. The method of claim 8, wherein the scroll bar is displayed in a specific area of the screen when a touch is inputted and disappears when the touch is released.

11. The method of claim 8, wherein the size of the scroll bar is adjusted in proportional to a drag distance or a movement distance.

12. An electronic device comprising:
at least one processor;
a memory; and
at least one program stored in the memory and configured to be executed on the at least one processor,
wherein the program, when executed on the at least one processor, displays content, displays a scroll bar in a specific area of a screen when a size of the content is greater than a screen size, detects a gesture for adjusting a size of the scroll bar, and scrolls the content in a direction corresponding to a direction of the gesture and in correspondence to a size of the adjusted scroll bar when the gesture is detected.

13. The electronic device of claim 12, wherein as the size of the scroll bar is increased, the scroll bar is scrolled to a position adjacent to an end part of the content; and
as the size of the scroll bar is reduced, the scroll bar is scrolled to a position adjacent to a first part of the content.

14. An electronic device comprising:
at least one processor;
a memory; and
at least one program stored in the memory and configured to be executed on the at least one processor,
wherein the program, when executed on the at least one processor, displays content, displays a scroll bar in a specific area of a screen when a size of the content is greater than a screen size, detects a gesture for adjusting a size of the scroll bar, and scrolls the content in a direction corresponding to a direction of the gesture and in correspondence to a size of the adjusted scroll bar when the gesture is detected.

15. The electronic device of claim 19, wherein as the size of the scroll bar is increased, the scroll bar is scrolled to a position adjacent to an end part of the content; and
as the size of the scroll bar is reduced, the scroll bar is scrolled to a position adjacent to a first part of the content.
